**Europäisches Patentamt**

**European Patent Office**

**Office européen des brevets**

(19)

(11) Veröffentlichungsnummer: **0 047 477**
**B1**

(12) **EUROPÄISCHE PATENTSCHRIFT**

(45) Veröffentlichungstag der Patentschrift:
**10.07.85**

(51) Int. Cl.⁴: **G 01 S 13/54**

(21) Anmeldenummer: **81106840.2**

(22) Anmeldetag: **01.09.81**

(54) **Puls-Doppler-Radar mit einer von Rekursionsfiltern gebildeten Festzeichenunterdrückungsschaltung.**

(30) Priorität: **04.09.80 DE 3033382**

(43) Veröffentlichungstag der Anmeldung:
**17.03.82 Patentblatt 82/11**

(45) Bekanntmachung des Hinweises auf die Patenterteilung:
**10.07.85 Patentblatt 85/28**

(84) Benannte Vertragsstaaten:
**BE CH FR GB IT LI NL**

(56) Entgegenhaltungen:
**DE - A - 2 434 732**
**DE - B - 2 029 774**
**DE - B - 2 029 836**
**DE - B - 2 166 591**
**US - A - 3 566 402**
**US - A - 4 137 532**
**US - A - 4 153 899**

(73) Patentinhaber: **Siemens Aktiengesellschaft, Berlin und München Wittelsbacherplatz 2, D-8000 München 2 (DE)**

(72) Erfinder: **Peters, Rainer, Dipl.-Ing., Goerdelerstrasse 12, D-8025 Unterhaching (DE)**

## Beschreibung

Die Erfindung bezieht sich auf ein Puls-Doppler-Radar mit einer Entfernungstorschaltung und mit einer Festzeichenunterdrückungsschaltung, bestehend aus Rekursionsfiltern mit wenigstens einem Verzögerungsglied, in dessen Rückführungsschleife mittels eines Wichtungsmultiplizierers eine Wichtung der Rekursionssignale bei Änderung der Pulsfolgefrequenz (PRF) unter Verwendung von umschaltbaren Wichtungsfaktoren erfolgt.

Die Umschaltung der Pulsfolgefrequenz in Radargeräten hat auf die Signalverarbeitung, z. B. bei der Unterdrückung von Festzielechos, in der Festzeichenunterdrückungsschaltung (MTI-Filter) erhebliche Auswirkungen. Die Abtastfilter einer Festzeichenunterdrückungsschaltung stellen einen Übertragungsvierpol dar. Sollen trotz zeitvarianter Abtastraten bestimmte Übertragungseigenschaften konstant bleiben, z. B. die unnormierte untere Grenzfrequenz, so muß das auf die Abtastrate normierte Übertragungsverhalten geändert werden. Das bedeutet bei rekursiven Abtastfiltern, daß die Wichtungsfaktoren in den einzelnen Rekursionen gemäß der jeweiligen Abtastrate geändert werden müssen. Diese Maßnahme hat eine Änderung des Übertragungsverhaltens zur Folge. Bei sprunghafter Änderung z. B. der Übertragungseigenschaften des Vierpols zeigen sie ein spezifisches Einschwingverhalten.

Eine Filterschaltung mit umschaltbaren Wichtungsfaktoren ist aus der DE-A-2 434 732 bekannt.

Aus der US-A-4 137 532 ist ein als digitale Filterbank ausgebildetes MTI-Filter für ein Puls-Doppler-Radar mit veränderbarer Pulsfolgefrequenz bekannt. In dieser Anordnung werden keine Rekursionsfilter verwendet. Die digitale Filterbank besteht aus einer Kaskadenkombination von Mehrpuls-Cancelern und einer Filterbank mit zeitvariabler Wichtung.

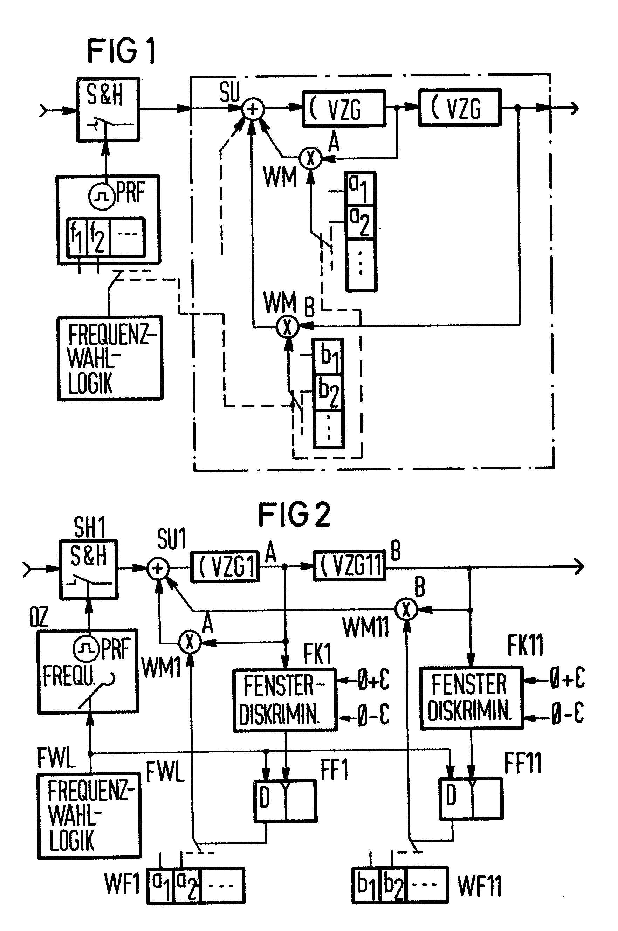

Eine solche Ausführung eines doppelt rekursiven MTI-Filterteils mit umschaltbaren Wichtungsfaktoren ist in der Fig. 1 dargestellt. Die Eingangssignale des Rekursionsfilters werden von einer Abtast- und Halteschaltung SH geliefert und über eine Summierschaltung SU an zwei hintereinandergeschaltete Verzögerungsglieder VZG mit je einer Rückführschleife zugeführt. In jede Rückführung ist ein Wichtungsmultiplizierer WM eingefügt, der die Rekursionssignale A, B vom Ausgang des jeweiligen Verzögerungsgliedes mit je einem Wichtungsfaktor a1, a2 ... und b1, b2 ... multipliziert. Die gewichteten Signale werden an je einen weiteren Eingang der Summierschaltung SU vor dem Eingang der ersten Verzögerungsleitung zugeführt. Die Umschaltung der Wichtungsfaktoren erfolgt in Abhängigkeit von der Frequenzauswahl für die Radarimpulse. Die Wirkung der Faktorumschaltung kann mathematisch durch eine äquivalente Sprungfunktiopn wiedergegeben werden, die der Eingangssignalfunktion additiv beaufschlagt wird. Die Größe des Sprunges errechnet sich zu

$$\text{Sprung} = (a_\nu - a_\mu) \cdot A + (b_\nu - b_\mu) \cdot B + (c_\nu - c_\mu) \cdot C + \ldots;$$

$$\nu/\mu = 1, 2, 3, \ldots$$

Beim Auftreten eines solchen Sprunges am Eingang des Rekursionsfilters laufen für die Ausgangsgröße Einschwingvorgänge ab, deren Größe, Dauer und spektraler Anteil abhängig ist von der Größe des Sprunges und von der Übertragungscharakteristik des Rekursionsfilters. Für eine bestimmte Zeit werden spektrale Anteile erzeugt, die in der Eingangsgröße nicht vorhanden waren und die in Radargeräten mit hoher Wahrscheinlichkeiten in Frequenzbereiche fallen, die Bewegtzielen zugeordnet sind. Diese Störsignale rufen in Radargeräten falsche Alarme für die Zeitdauer ihres Auftretens hervor.

Dieser störende Einfluß könnte durch Unterbrechung des Signalflusses am Ausgang des Rekursionsfilters für die Zeitdauer des Einschwingvorganges vermieden werden. Eine derartige Lösung hätte jedoch den Nachteil, daß in diesem Zeitraum auftretende von Bewegtzielechos herrührende Nutzsignale verloren gingen.

Aus der Gleichung für die Sprungfunktion geht hervor, daß die Größe des störenden Sprunges von der Differenz der Wichtungsfaktoren und von der Größe der Rekursionssignale A, B, C, ... an den Signaleingängen der Wichtungsmultiplizierer WM abhängig ist. Da die Wichtungsfaktoren die Übertragungscharakteristik des Rekursionsfilters bestimmen, scheidet hier die Möglichkeit einer Änderung aus.

Der Erfindung liegt die Aufgabe zugrunde, bei einem Puls-Doppler-Radar der eingangs genannten Art die in einem Rekursionsfilter durch Wichtungsfaktorumschaltung entstehenden Störungen zu reduzieren.

Ausgehend von der Tatsache, daß die Rekursionssignale A, B, C ... am Eingang der Wichtungsmultiplizierer eine zeitliche Periodizität ohne Gleichspannungsanteil aufweisen oder aus nullsymmetrischem Rauschen bestehen und daß sie zum Zeitpunkt der Umschaltung der Pulsfolgefrequenz innerhalb ihrer nullsymmetrischen Maximalwerte jeden Wert annehmen können, wird die Sprungfunktion gemäß der Erfindung dadurch kleingehalten, daß die Umschaltung der für jede Pulsfolgefrequenz bereitgehaltenen Wichtungsfaktoren nach einer Änderung der Pulsfolgefrequenz verzögert zu jeweils dem Zeitpunkt erfolgt, in dem das vom Ausgang der Verzögerungsleitung zurückgeführte Rekursionssignal gerade die Nullinie durchläuft.

Die bei der Umschaltung der Pulsfolgefrequenz aufgrund von Einschwingvorgängen in den Filtern

2

## 0 047 477

entstehenden Störsignale werden bei Dopplerfrequenzen in der Nähe des Festzeichenspektrums durch die verzögerte Wichtungsfaktorzuweisung weitgehend unterdrückt. Bei Dopplerfrequenzen im Bereich von Bewegtzielen werden Störsignale dagegen nur wenig verringert. Falschalarmanzeigen werden hier jedoch verhindert, da die Nutzsignale in diesem Falle Störsignale überdecken.

Die verzögerte Wichtungsfaktorumschaltung kann sowohl bei analoger als auch bei digitaler Ausbildung der Signalverarbeitung mit einfachen oder mehrfach-rekursiven Filtern mit gleichem Vorteil angewendet werden.

Die Erfindung und weitere Einzelheiten der Erfindung werden anhand der Fig. 2 bis 4 näher erläutert. Es zeigt

Fig. 2 eine analoge Ausführung eines doppelt-rekursiven MTI-Filters unter Verwendung eines Null-Detektors,

Fig. 3 die analoge Ausführung eines doppelt-rekursiven MTI-Filters unter Verwendung eines Komparators,

Fig. 4 die digitale Ausführung eines doppelt-rekursiven MTI-Filters.

In allen nachfolgend beschriebenen Ausführungsbeispielen sind die Wichtungsschaltungen in Form von Multiplizierern dargestellt, deren beide Eingänge den Signal- bzw. den Wichtungseingang bilden. Dem Wichtungseingang wird der Wichtungsfaktor, dem Signaleingang das Rekursionssignal des zugehörigen Verzögerungsgliedes zugeteilt. Die Wichtungsfaktoren werden nicht, wie bei der bekannten Schaltung nach der Fig. 1, synchron mit der Pulsfolgefrequenz umgeschaltet. Bei jedem Nulldurchgang des Signaleinganges des Multiplizierers jeder Wichtungsschaltung wird eine Kennung für die jeweils anliegende Pulsfolgefrequenz abgefragt. Die Um- bzw. Einschaltung der Pulsfolgefrequenz erfolgt nach eigenen Kriterien. In Abhängigkeit von der abgefragten Kennungsinformation wird der der jeweiligen Pulsfolgefrequenz zugeordnete Wichtungsfaktor auf den Wichtungseingang des Multiplizierers geschaltet.

Im Ausführungsbeispiel nach Fig. 2 werden die Echosignale über eine umschaltbare Abtast- und Halteschaltung SH1 an das Rekursionsfilter mit der eingangsseitigen Summierschaltung SU1 geführt. Die Umschaltung der Abtasthalteschaltung SH1 erfolgt in Abhängigkeit von der jeweils in einem umschaltbaren Oszillator OZ erzeugten Pulsfolgefrequenz in Verbindung mit einer Frequenzwahllogik FWL. An den Ausgang der Summierschaltung SU1 des doppelt-rekursiven Filters schließen sich in Reihenschaltung die Verzögerungsglieder VZG1 und VZG11 an. Vom Ausgang der Verzögerungsglieder werden die Rekursionssignale A und B an den Signaleingang je eines Wichtungsmultiplizierers WM1 und WM11 zugeführt. Die in Schaltungen WF1 und WF11 bereitgestellten Wichtungsfaktoren a1, a2 ... und b1, b2 ... werden dem Wichtungseingang des zugehörigen Wichtungsmultiplizierers WM1 bzw. WM11 zugeteilt. Die gewichteten Rekursionssignale werden vom Ausgang der Wichtungsmultiplizierer an weitere Eingänge der Summierschaltung SU geführt.

Um die Wichtungsfaktor-Umschaltung dann vornehmen zu können, wenn das zugehörige Rekursionssignal den Wert Null durchläuft, wird ein Null-Detektor (Fensterdiskriminator Fenstergrenzen mit den Schwellen bei $\Phi - \varepsilon$ und $\Phi + \varepsilon$) FK1 und FK11 an den Signaleingang des jeweiligen Multiplizierers MW1 bzw. MW11 angeschaltet. Bei einer Meldung am Ausgang des Null-Detektors FK1 bzw. FK11 wird in einem D-Flipflop die Kennung abgefragt, welche Pulsfolgefrequenz zu diesem Zeitpunkt eingeschaltet ist und die Zuweisung des entsprechenden Wichtungsfaktors a1, a2 ... bzw. b1, b2 ... aus den Schaltungen WF1 bzw. WF11 an die Wichtungsmultiplizierer WM1 bzw. WM11 veranlaßt.

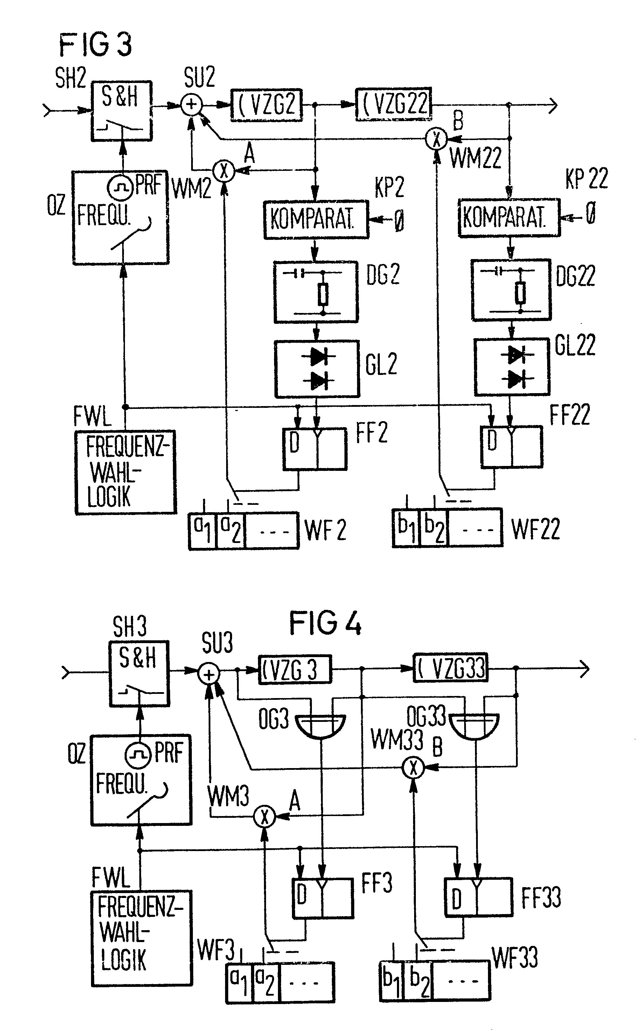

Das Ausführungsbeispiel eines Rekursionsfilters nach Fig. 3 unterscheidet sich von dem vorgeschriebenen Ausführungsbeispiel allein durch die Art der Feststellung des Nulldurchgangs der Rekursionssignale. Alle übrigen Schaltungsteile können unverändert bleiben. Der Eingang des Wichtungsmultiplizierers WM2 bzw. WM22 ist hier an je einem Komparator KP2 und KP22 angeschlossen, dessen Ausgangssignal in einer Differenzierschaltung DG2 bzw. DG22 und einer nachfolgenden Zweiweg-Gleichrichterschaltung GL2, GL22 weiter aufbereitet wird. Dieses Signal wird dazu verwendet, ein D-Flipflop FF2 bzw. FF22 in der oben beschriebenen Weise für die Wichtungsfaktorzuweisung zu steuern.

Bei Verwendung von digitalen Rekursionsfiltern lassen sich die anhand der Fig. 2 und 3 beschriebenen Ausführungsbeispiele grundsätzlich auch in Digitaltechnik realisieren.

In Fig. 4 ist ein Ausführungsbeispiel dargestellt, das von einer digitalen Version eines MTI-Filters ausgeht. Nachdem auch hier der Signaleingang eines jeden Wichtungsmultiplizierers WM3 und WM33 am Ausgang je eines Verzögerungsgliedes VZG3 und VZG33 anliegt, besteht kein prinzipieller Unterschied zu den bereits beschriebenen Rekursionsfiltern der Fig. 2 und 3. Die einzelnen Ziffern in den Bezugszeichen der entsprechenden Schaltungsteile in Fig. 4 bzw. 3 sind gegenüber Fig. 2 um den Wert zwei bzw. eins erhöht, so daß somit die Bezugszeichen SH3, WF3, WF33, usw. bzw. SH2, WF2, WF22, usw. den Bezugszeichen SH1, WF1, WF11 entsprechen. Um hier den Durchgang der Rekursionssignale durch Null feststellen zu können, werden die Vorzeichenstellen der digitalen Signale vor und nach einem jeden Verzögerungsglied den beiden Eingängen eines Exklusiv-Oder-Gatters OG3 bzw. OG33 zugeführt. Liegen vom Eingang und Ausgang des jeweiligen Verzögerungsgliedes VZG3, VZG33 unterschiedliche Vorzeichen vor, dann liefert der Gatterausgang logisch Eins. Diese Meldung wird, wie bei den bereits vorgeschriebenen Ausführungsbeispielen dazu verwendet, um mittels eines D-Flipflops FF3 bzw. FF33 die Kennung abzufragen, welche Pulsfolgefrequenz gerade eingeschaltet ist

3

und die Wichtungsfaktorzuweisung vorzunehmen.

Unterschiedliche Vorzeichenmeldungen vor und nach dem Verzögerungsglied deuten darauf hin, daß bei der nächsten Signalabtastung, die am Filtereingang stattfindet, am Ausgang des Verzögerungsgliedes ein Nulldurchgang der Rekursionsspannung stattfinden wird.

Alle beschriebenen Schaltungen lassen sich bei getrennter Entfernungskanalverarbeitung auch im Zeitmultiplexbetrieb verwenden. Hierzu muß die Wichtungsfaktorzuweisung für jeden Entfernungskanal gesondert vorgenommen und gespeichert werden.

**Patentansprüche**

1. Puls-Doppler-Radar mit einer Entfernungstorschaltung und mit einer Festzeichenunterdrückungsschaltung, bestehend aus Rekursionsfiltern mit wenigstens einem Verzögerungsglied (VZG; VZG1, VZG2, VZG3; VZG11, VZG22, VZG33), in dessen Rückführungsschleife mittels eines Wichtungsmultiplizierers (WM; WM1, WM2, WM3; WM11, WM22, WM33) eine Wichtung der Rekursionssignale (A; B) bei Änderung der Pulsfolgefrequenz (PRF) unter Verwendung von umschaltbaren Wichtungsfaktoren ($a_1$, $a_2$, ...; $b_1$, $b_2$, ...; ...) erfolgt, dadurch gekennzeichnet, daß die Umschaltung der für jede Pulsfolgefrequenz ($f_1$; $f_2$; ...) bereitgehaltenen Wichtungsfaktoren ($a_1$, $a_2$, ...; $b_1$, $b_2$, ...; ...) nach einer Änderung der Pulsfolgefrequenz verzögert zu jeweils dem Zeitpunkt erfolgt, in dem das vom Ausgang der Verzögerungsleitung zurückgeführte Rekursionssignal (A; B; ...) gerade die Nullinie durchläuft.

2. Puls-Doppler-Radar nach Anspruch 1, dadurch gekennzeichnet, daß die verzögerte Wichtungsfaktor-Umschaltung bei einem in Analogtechnik ausgeführten Rekursionsfilter unter Verwendung je eines als Null-Detektor ausgebildeten Fensterdiskriminators (FK1; FK11), der an den Signaleingang des Wichtungsmultiplizierers (WM1; WM11) angeschlossen ist, in Verbindung mit einem D-Flip-Flop (FF1; FF11) erfolgt.

3. Puls-Doppler-Radar nach Anspruch 1, dadurch gekennzeichnet, daß die verzögerte Wichtungsfaktor-Umschaltung bei einem analogen Rekursionsfilter unter Verwendung je eines an den Signaleingang des Wichtungsmultiplizierers (WM2, WM22) angeschlossenen Null-Komparators (KP2; KP22) erfolgt, der über eine Differenzier- und Zweiweg-Gleichrichterschaltung (DG2, GL2; DG22, GL22) mit einem D-Flip-Flop (FF2; FF22) verbunden ist.

4. Puls-Doppler-Radar nach Anspruch 1, dadurch gekennzeichnet, daß zur verzögerten Wichtungsfaktorumschaltung bei einem digitalen Rekursionsfilter am Eingang und Ausgang jedes als Verzögerungsglied ausgebildeten Schieberegisters (VZG3; VZG33) die Vorzeichenstellen der digitalen Signale in einem Exklusiv-Oder-Gatter (OG3; OG33) überwacht und in Verbindung mit einem nachgeschalteten D-Flip-Flop (FF3; FF33) ausgewertet werden.

**Claims**

1. A pulse Doppler radar with a range gate circuit and a moving target indicator circuit that comprises recursive filters having at least one delay element (VZG: VZG1, VZG2, VZG3; VZG11, VZG22, VZG33) in whose return loop the recursive signals (A:B) are weighted in the event of a change in the pulse repetition frequency (PRF) by means of a weighting multiplier (WM: WM1, WM2, WM3; WM11, WM22, WM33) using weighting factors ($a_1$, $a_2$, ...; $b_1$, $b_2$ ...;) which can be switched over characterised in that the switch-over of the weighting factors ($a_1$, $a_2$, ...; $b_1$, $b_2$, ...; ...) which are kept available for each pulse repetition frequency ($f_1$; $f_2$ ...) following a change in the pulse repetition frequency is delayed to occur at the time at which the recursive signal (A; B; ...) returned from the output of the delay line passes through zero.

2. A pulse Doppler radar as claimed in Claim 1, characterised in that the delayed switch-over of the weighting factors takes place in an analogue recursive filter, in each case using a window discriminator (FK1; FK11) designed as a zero detector and connected to the signal input of the weighting multiplier (WM1; WM11), in association with a D-type flip-flop (FF1; FF11).

3. A pulse Doppler radar as claimed in Claim 1, characterised in that the delayed switch-over of the weighting factors takes place in an analogue recursive filter in each case using a zero comparator (KP2; KP22) connected to the signal input of the weighting multiplier (WM2, WM22) and connected to a D-type flip-flop (FF2; FF22) via a differentiator and fullwave rectifier circuit (DG2, GL2; DG22, GL22).

4. A pulse Doppler radar as claimed in Claim 1, characterised in that for the delayed switch-over of the weighting factors in a digital recursive filter each shift register (VZG3; VZG33) is a delay element at whose input and output the sign characters of the digital signals are monitored in an EXCLUSIVE-OR gate (OG3; OG33) and are analysed in association with a subsequently connected D-type flip-flop (FF3; FF33).

## Revendications

1. Radar Doppler à impulsions comportant un circuit à fenêtres de distance et un circuit de suppression des échos fixes, constitué par des filtres récursifs comportant au moins une ligne à retard (VZG; VZG1, VZG2, VZG3; VZG11, VZG22, VZG33), dans la boucle de réactionde laquelle une pondération des signaux de récurrence (A; B) est réalisée au moyen d'un multiplicateur de pondération (WM; WM1, WM2, WM3; WM11, WM22, WM33) dans le cas d'une modification de la fréquence (PRF) de répétition des impulsions, et ce moyennant l'utilisation de facteurs de pondération commutables ($a_1$, $a_2$ ...; $b_1$, $b_2$, ...; ...), caractérisé par le fait que la commutation des facteurs de pondération ($a_1$, $a_2$, ...; $b_1$, $b_2$, ...; ...) maintenus prêts pour chaque fréquence de répétition des impulsions ($f_1$; $f_2$; ...) est réalisée de façon retardée, conformément à une modification de la fréquence de répétition des impulsions, à l'instant auquel le signal de récurrence (A; B; ...) renvoyé par la sortie de la ligne à retard, intersecte précisément la ligne de zéro.

2. Radar Doppler à impulsions suivant la revendication 1, caractérisé par le fait que la commutation retardée du facteur de pondération s'effectue en liaison avec une bascule bistable de type D (FF1; FF11), dans le cas d'un filtre récursif réalisé selon la technique analogique, moyennant l'utilisation d'un dicriminateur respectif de fenêtres (FK1, FK11) réalisé sous la forme d'un détecteur de zéro et qui est raccordé à l'entrée des signaux du multiplicateur de pondération (WM1; WM11).

3. Radar Doppler à impulsions suivant la revendication 1, caractérisé par le fait que la commutation retardée du facteur de pondération est réalisée, dans le cas d'un filtre récursif analogique, moyennant l'utilisation d'un comparateur respectif à zéro (KP2; KP22) raccordé à l'entrée des signaux du multiplicateur de pondération (WM2, WM22) et qui est relié à une bascule bistable de type D (FF2; FF22) par l'intermédiaire d'un circuit différentiateur et d'un circuit redresseur sur deux alternances (DG2, GL2; DG22, GL22).

4. Radar Doppler à impulsions suivant la revendication 1, caractérisé par le fait que pour réaliser la commutation retardée du facteur de pondération, dans le cas d'un filtre récursif numérique, à l'entrée et à la sortie de chaque registre à décalage (VZG3; VZG33) réalisé sous la forme d'une ligne à retard, les positions de signes des signaux numériques sont contrôlées dans un circuit OU-Exclusif (OG3; OG33) et sont évaluées en liaison avec une bascule bistable de type D (FF3; FF33) branchée en aval.

# FIG 1

# FIG 2

# FIG 3

# FIG 4